(19) Europäisches Patentamt
European Patent Office
Office européen des brevets

(11) **EP 2 473 063 B1**

(12) **EUROPEAN PATENT SPECIFICATION**

(45) Date of publication and mention
of the grant of the patent:
**12.04.2017 Bulletin 2017/15**

(21) Application number: **09848842.2**

(22) Date of filing: **31.08.2009**

(51) Int Cl.:
*A23K 40/20* (2016.01)   *A23K 50/75* (2016.01)
*A23K 20/105* (2016.01)   *A23K 20/158* (2016.01)

(86) International application number:
**PCT/US2009/055472**

(87) International publication number:
**WO 2011/025496 (03.03.2011 Gazette 2011/09)**

(54) **IMPROVED METHOD FOR CONDITIONING ANIMAL FEED**

VERBESSERTES VERFAHREN ZUR AUFBEREITUNG VON TIERFUTTER

PROCÉDÉ AMÉLIORÉ POUR CONDITIONNER DES ALIMENTS POUR ANIMAUX

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(43) Date of publication of application:
**11.07.2012 Bulletin 2012/28**

(60) Divisional application:
**16205060.3**

(73) Proprietor: **Anitox Corporation**
**Lawrenceville, GA 30043 (US)**

(72) Inventors:
• **WILSON, James, D.**
**Milton, FL 32583 (US)**
• **PIMENTEL, Julio**
**Buford, GA 30519 (US)**
• **RICHARDSON, Kurt**
**Maysville, GA 30558 (US)**
• **MERKEL, Jeffrey**
**Atlanta, GA 30328 (US)**

(74) Representative: **HGF Limited**
**8th Floor**
**140 London Wall**
**London EC2Y 5DN (GB)**

(56) References cited:
**WO-A1-03/028475**   **WO-A1-2008/029909**
**US-A- 4 701 331**   **US-A- 5 505 976**
**US-A- 5 985 336**   **US-A1- 2004 170 729**
**US-A1- 2008 044 538**

Remarks:
The file contains technical information submitted after the application was filed and not included in this specification

**EP 2 473 063 B1**

**Description**

**BACKGROUND OF THE INVENTION**

**FIELD OF THE INVENTION**

A heat treatment for conditioning animal feed by admixing a solution containing mixed organic acids, an ethoxylated castor oil surfactant and an antimicrobial terpene, that improves pellet quality (starch gelatinization, pellet durability, moisture retention), feed mill parameters (feed throughput, energy consumption) and improves mold and bacterial inhibition compared to commercial organic acid compositions.

**BACKGROUND**

In the animal industry it is common to find pelleted feed. Pelletization is a transformation of powder feed into small granules having all the required nutrients for an animal. Typically, production from the raw materials through pelletization accounts for 60 - 70% of the cost of making animal feeds. Finding a procedure or modification to decrease the cost of production without reducing feed quality has been one of the most important inquiries in the animal industry. Several studies indicate that pelleting improves feed conversion by as much as 12%. This improvement in performance is attributed to decreases in feed wastage, ingredient segregation, and energy expenditures while eating (Behnke, K. C. 1994, "Factors affecting pellet quality" pages 44-54, Proc. Maryland Nutr. Conf. Feed Manuf., College Park, MD. Maryland Feed Ind. Council. and Univ. Maryland, College Park. Briggs; J.L., D.E. Maier, B.A. Watkins, and K.C. Behnke. 1999, "Effect of ingredients and processing parameters on pellet quality", Poult. Sci. 78: 1464-1471).

Durable pellets reduce waste, reduce segregation, improve palatability and allow larger meals to be eaten in less time. Chicks given mash spent 14.3% of a 12 hour day eating vs. 4.7% for pellet-fed chicks (Jensen L., L.H. Merill, C.V. Reddy and J. McGinnis, 1962, "Observations on eating patterns and rate of food passage of birds fed pelleted or unpelleted diets", Poult. Sci. 41:1414-1419). The process of pelletization requires a conditioning step, which involves steam to gelatinize the starch in the diet and to produce better binding, thereby increasing the durability of the pellets. Starch gelatinization is the process in which water in the form of steam is diffused into the starch granule, causing swelling (Parker, R. and S.G. Ring. 2001, "Mini Review: Aspects of the Physical Chemistry of Starch",. J. Cereal Sci. 34: 1-17). As the gelatinized starch cools it forms a gel, which acts as an adhesive, causing particle binding (Lund, D. 1984, "Influence of time, temperature, moisture, ingredients and processing conditions on starch gelatinization", CRC Crit. Rev. Food Sci. Nutr. 20:249-273). The addition of high amounts of into the starch granule, causing swelling (Parker, R. and S.G. Ring, 2001, "Mini Review: Aspects of the Physical Chemistry of Starch",. J. Cereal Sci. 34: 1-17). As the gelatinized starch cools it forms a gel, which acts as an adhesive, causing particle binding (Lund, D., 1984, "Influence of time, temperature, moisture, ingredients and processing conditions on starch gelatinization", CRC Crit. Rev. Food Sci. Nutr. 20:249-273). The addition of high amounts of moisture also lowers the onset temperature required for starch gelatinization to occur. Gelatinized starch has generally been thought to improve enzymatic access to glucosidic linkages and consequently improve digestibility (Parker, R. and S.G. Ring, 2001, "Mini Review: Aspects of the Physical Chemistry of Starch", J. Cereal Sci. 34: 1-17).

Feed pellets are damaged during loading, unloading, storage, conveying and transferring to feeders. The handling and transport of the feed often results in increased fines and broken pellets and, in extreme cases, reduces the total percentage of pellets that reach the feeders. It is thought that for every 10% increase in fines, there is a loss of one point of feed conversion, which then requires more feed eaten to produce the same amount of meat. The most common measurements used to assess pellet quality are the pellet durability index (PDI) and the modified pellet durability index (MPDI). PDI is determined by the percentage of intact or partial pellets remaining after they have been in a tumbling-spinning box for 10 minutes. The MPDI is similar to PDI but five 13-mm hex nuts are added to the pre-tumbled pellets to simulate handling and transportation of feed. According to the present invention, percent fines is improved at least 10% compared to a control sample treated with water, preferably at least 15% or 20%.

During conditioning, steam adds up to 6% moisture to feed. Each percent of moisture added to the feed through steam raises the mash temperature about 23°C, which improves the conditioning process by optimizing pellet mill operation and pellet durability (Fairfield, D., 2003 "Pelleting for Profit-Part 1", Feed and Feeding digest 54 (6) 2003) but this moisture is lost when the pellet is cooled down.

Several studies have shown that the addition of water on top of the moisture added during the conditioning process can improve pelletization (Fairchild, F. and D. Greer, 1999, "Pelleting with precise mixer moisture control, Feed Int. 20 (8): 32-36; Moritz, J.S et al, 2003 "Feed manufacture and feeding of rations with graded levels of added moisture formulated at different densities", J. Appl. Pout. Res. 12:371-381). Motitz et al and Hott et al reported an increase in PDI and a decrease in energy usage by the addition of 2.5 to 5% moisture to a corn-soybean based diet at the mixer (Moritz, J. S. et al, 2001, "Effect of moisture addition at the mixer to a corn-soybean-based diet on broiler performance", J. Appl.

Poult. Res. 10: 347-353;. Hott et al, 2008, "The effect of moisture addition with a mold inhibitor on pellet quality, feed manufacture and broiler performance", J. Appl. Poult. Res. 17:262-271).

Moisture addition at the mixer was shown to increase pellet quality and decrease pellet mill energy consumption. Moisture addition was also found to reduce the temperature difference ($\Delta$T) between the conditioned mash and the hot pellets, which indicates a decrease in die wear.

Moisture added cold to feed in a mixer becomes bound in the various heat-related reactions, such as starch gelatinization resulting in an increased PDI. Also this moisture is not as easily removed from pellets as moisture added in conditioning. However, the extra moisture is able to migrate to the pellet surface, which can result in a significant molding hazard. The use of a surfactant in moisture additives facilitates the absorption of water into the mash feed, thereby reducing the molding hazard.

Moisture addition raises a couple of concerns, which are the relation between high moisture and mold growth, and nutrition dilution (Rahnema, S. and S.M. Neal, 1992, "Preservation and use of chemically treated high-moisture corn by weanling pigs", J. Prod. Agric. 5 (4):458-461). Examples of fungi commonly found in stored grains are from the *Aspergillus, Penicillium,* and *Fusarium* genera, e.g. *A. parasiticus, F. tricinctum* and *P. citrinum,* (Smith, J.E., 1982, "Mycotoxins and poultry management", World's Poult. Sci. J. 38 (3):201-212). Mold spore growth and germination often elicit feed spoilage and the production of mycotoxins, both of which are detrimental to poultry production. Tabib et. al. found that the process of pelleting conventional poultry diets reduces mold counts, while the addition of a mold inhibitor further reduces these counts (Tabib, Z., F. Jones, and P.B. Hamilton, 1984, "Effect of pelleting poultry feed on the activity of molds and mold inhibitors", Poult Sci. 63:70-75).

Commercial mold inhibitors are composed of one or more organic acids. These are primarily propionic, benzoic, butyric, acetic, and formic acid. Organic acids have been a major additive for reducing the incidence of food borne infections. The mechanism by which small chain fatty acids exert antimicrobial activity is that undissociated (RCOOH = non-ionized) acids are lipid-permeable and so can cross the microbial cell wall, then dissociate in the more alkaline interior of the microorganism (RCOOH-> RCOO$^-$ + H$^+$) making the cytoplasm unstable for survival. This release of hydrogen ion disrupts cytoplasmic function and inhibits growth (Van Immerseel, F., J.B. Russell, M.D. Flythe, I. Gantois, L.Timbermont, F. Pasmans, F. Haesebrouck, and R. Ducatelle, 2006, "The use of organic acids to combat Salmonella in poultry: a mechanistic explanation of the efficacy", Avian Pathology. 35(3): 182-188). The use of organic acids, especially formic and propionic is well documented in the art.

The application of propionic acid and other organic acids as feed preservatives has been well documented (Paster, N. 1979, "A commercial scale study of the efficiency of propionic acid and calcium propionate as fungistats in poultry feed", Poult Sci. 58:572-576). Propionic acid is a more potent mold inhibitor than acetic, valeric, butyric, lactic or benzoic acid. Propionic acid has an effective dose between 0.05 and 0.25 wt.% contrary to the other organic acids that require more than 0.5 wt.% (Higgins C. and F. Brinkhaus, 1999, "Efficacy of several organic acids against mold", J. Applied Poultry Res. 8:480-487). Preservation of high moisture corn was obtained when treated with 0.5% of a mixture containing 80 wt.% propionic acid and 20 wt.% acetic acid. This product was fed to weanling pigs without causing any detrimental effect on performance. The addition of 0, 0.1, 0.2, 0.3 and 0.4 wt.% acetic acid to water did not affect performance or intestinal microbial counts in broiler chickens (Akbari, M.R., H. Kermanshahni and G.A. Kalidari, 2004, "Effect of acetic acid administration in drinking water on performance growth characteristics and ileal microflora of broiler chickens", J. Sci. & Technol. Agric. & Natur. Resour. 8 (3): 148).

Several patents disclose the use of organic acids as antimicrobials but do not suggest any other benefits. US 6,867,233 teaches an antimicrobial acidic formulation based on an organic acid and a surfactant for the treatment of food and food contact surfaces. This composition is stabilized with propylene glycol, an antifoaming agent and a salt. The acids used include acetic acid but not butyric acid. It also includes an alkyl sulfate surfactant but not an ethoxylated castor oil. US 7,169,424 discloses a mold inhibitor comprising a mixture of two buffered organic acids, a surfactant and an essential oil, together being less corrosive than a single, unbuffered organic acid. PCT/US 2007/80001 discloses a method for inhibiting the growth of pathogens in pelleted feed that increases the efficiency of the pelleting process without introducing bad odors owing to the presence of the ammonium salt of butyric acid. The present invention does not include ammonium-buffered organic acids, and does not have problems with odor since a different organic acid and more effective surfactant are used.

Feed and feed ingredients are vectors of pathogenic bacteria in animals which can carry over to humans. Food borne illness problems due to *Campylobacter spp., Shigella spp., Listeria monocytogenes, Yersenia enterolitica, Salmonella spp.* and *E. coli* infections are prevalent in many countries. CDC statistics suggest that 76 million people become sick each year due to consumption of undercooked meat, eggs, shellfish, unpasteurized dairy products and unwashed vegetables. Food-producing animals are the major reservoir of non-typhi serotypes of *Salmonella enterica*, which cause an estimated 1.4 million illnesses, 16,400 hospitalizations and 580 deaths each year in the United States. Salmonella, a facultative intracellular pathogen, is capable of infesting humans and animals resulting in infection. After ingestion, Salmonella can inhabit and penetrate the intestine causing a systemic infection (Henderson, S. et. al., 1999, "Early events in the pathogenesis of avian salmonellosis", Infec. Immun. 67(7): 3580-3586). The majority of the salmonellosis present in humans has been traced to the consumption of eggs (Humphrey, T.J. et. al, 1994, "Contamination of egg shell and contents with Salmonella enteritidis", Int. J. Food Microbiol. 21 (1-2): 31-40). Factors present in eggs help maintain lower Salmonella levels in freshly laid eggs (0.6% incidence) even though eggs from the oviduct of the same hen show higher Salmonella levels (29% incidence); these factors may include antibodies, antibacterial enzymes and iron-sequestering and bacterial protease-inhibiting proteins in yolk and albumen (Keller, L.H. et. al., 1995, Salmonella enteritidis colonization of the reproductive tract and forming and freshly laid eggs of chickens", Infec. Immun. 63 (7): 2443-2449). Pelletization at high temperature and high-pressure conditions reduces the number not only of Salmonella but also other bacteria. The problem with pelletization is that there is no protection against microbial recontamination of feed before animal consumption, e.g. at bagging, transport, feeders.

Many products have been developed for the preservation of water and feed for animal uses. Examples of water additives are ammonium quaternary products, chlorite-based products, chlorination, chlorine dioxide and acid compounds (acetic, sorbic, ascorbic, citric, and formic acid). Methods for preservation of feed include heat treatment, organic acids, formaldehyde, essential oils and irradiation. The elimination of Salmonella with organic acids requires high levels of treatment, which implies high cost to the animal industry. Formaldehyde is thought to be a cancer-causing chemical, even though a link has not been demonstrated. Irradiation of feed is not cost-effective and not consumer-friendly. Sodium percarbonate is a powerful oxidizer that is used as an antimicrobial in feed at a level of 1-2% of the diet.

Organic acids have been a major additive to reduce the incidence of food borne infections. The use of small-, medium- and long-chain fatty acids, e.g. formic, propionic, butyric, lactic, citric, malic, and others, are well known.

Ethoxylated castor oil emulsifier is produced by the reaction of castor oil with ethylene oxide. Ethoxylated castor oil emulsifiers are of various chain lengths, depending on the quantity of ethylene oxide used during synthesis. The molar ratio can vary from 1 molecule of castor oil to 1 - 200 molecules of ethylene oxide, producing an ethoxylated castor oil emulsifier named PEG-x (polyethylene glycol) castor oil emulsifier, where x is the number of ethylene oxide moieties (Fruijtier-Polloth, C., 2005, "Safety assessment on polyethylene glycols (PEGs) and their derivatives as used in cosmetic products", Toxicology 214: 1-38). These emulsifiers have been widely used to solubilize water-insoluble drugs for human and animal treatments. They are nonvolatile, stable compounds, which do not hydrolyze or deteriorate on storage. Castor oil is obtained from the seeds of *Ricinus communis* and consists primarily of the triglycerides of ricinoleic, isoricinoleic, stearic and dihydroxystearic acids. Castor oil is 90% ricinoleic acid (12-Hydroxyoleic acid), a nontoxic, biodegradable and renewable resource.

Several PCT applications have been filed on uses for ethoxylated castor oil surfactant. WO 99/60865 relates to a surfactant-water emulsion added to animal feed before, or after, heat treatment. The emulsion helps maintain or reduce water lost during heat treatment. The emulsion consists of 1 to 8 parts water and 0.005 to 0.5 parts surfactant. WO 97 /28896 teaches the surfactant can facilitate dispersion of molasses. WO 96/11585 discloses the use of ethoxylated castor oil in animal feed to improve the nutrient value of feed. WO 95/28091 adds ethoxylated castor oil to conventional dry animal feed to improve the availability of nutritious substances, increase animal growth and decrease mortality. These four patents mention the addition of ethoxylated castor oil surfactant, preferably as an emulsion, to improve digestibility of hydrophobic substances in animal feeds but do not show how best to use them in the production process to decrease energy consumption and to prevent mold and bacterial growth in feed.

US 5505976 describes a process of treating animal feed with aqueous formaldehyde which renders the feed highly resistant to recontamination by pathogenic bacteria such as Salmonella, Streptococcus, Staphylococcus, E. coli, Clostridia and Bacillus. US 2008044538 describes a composition for use in animal feed, which is prepared by extraction of a solid preparation containing an oil-soluble pigment, where the extraction takes place in the presence of water, an edible oil or fat and a nonionic surfactant. US 4701331 describes a process for the preparation of blends for use in livestock feeding by means the addition to the carrier substance of an active principle and of easily applicable surfactants.

## SUMMARY OF THE INVENTION

An object of the invention is to provide a chemical composition that improves the pelleting process, including where an extrusion process is employed, of animal feed and that has anti-microbial activity.

Another object is to provide a method for making pelleted animal feed, comprising:

(i) preparing a composition containing

a) 10 - 90 wt%. of an organic acid selected from the group consisting of acetic, propionic, butyric acid and mixtures thereof,

b) 1 - 90 wt.% of ethoxylated castor oil surfactant having an HLB from 4 to 18 and a molar ratio of 1 molecule of castor oil to 1 - 200 molecules of ethylene oxide,

c) 0 - 20 wt.% of antimicrobial terpenes, or essential oils;

d) 0 - 40 wt.% water;

(ii) adding water to prepare a heat-treating composition and applying an effective amount of said heat-treating composition to an animal feed, with sufficient heating to pelletize or extrude the feed.

Benefits of the invention include:

Percent fines is improved at least 10% compared to a control sample treated with water, preferably at least 15% or 20%.
Energy consumption is improved at least 15% compared to a control sample treated with water, preferably at least 20% or 25%.
Pellet moisture is improved at least 0.4% compared to a control sample treated with water, preferably at least 0.5% or 0.6%.
The treated feed has a bacterial load which is less than 20,000 cfu/g, preferably less than 10,000 cfu/g.

The treated feed has a mold load which is less than 20,000 cfu/g, preferably less than 10,000 cfu/g.

## DESCRIPTION OF THE PREFERRED EMBODIMENTS

Definitions

"Weight percent" of a component is based on the total weight of the formulation or composition in which the component is included.
"Organic acid" includes formic, acetic, propionic, butyric and other $C_4$ to $C_{24}$ fatty acids, or mono-, di-, or triglycerides of $C_1$ to $C_{24}$ organic fatty acids.
"Antimicrobial terpene" can include allyl disulfide, citral, pinene, nerol, geraniol, carvacrol, eugenol, carvone, anethole, camphor, menthol, limonene, farnesol, carotene, thymol, borneol, myrcene, terpenene, linalool, or mixtures thereof. More specifically, the terpenes may comprise allyl disulfide, thymol, citral, eugenol, limonene, carvacrol, and carvone, or mixtures thereof. The terpene component may include other terpenes with anti-microbial properties.
The term "effective amount" of a compound means an amount capable of performing the function or having the property for which the effective amount is expressed, such as a non-toxic but sufficient amount to provide the desired level of pelletizing, milling or anti-microbial benefits. Thus an effective amount may be determined by one of ordinary skill in the art using only routine experimentation.
When pelletizing feed, steam is injected into the mash then the mass is pelleted. In extruded feed, steam is injected into the mash under pressure then the mass is pelleted. Extruded feed is less dense than mash feed.
Formulations vary not only in the concentrations of the major components, e.g., the organic acids, but also in the type of terpenes, surfactant(s) and water concentration. This invention can be modified by adding or deleting the terpene, type of organic acid, and type of surfactant.
The terms "synergistic effect" or "synergy" mean improved palletizing or preservative effects when the ingredients are added as a mixture compared to the individual components.
In general, the method of the invention comprises a composition containing:

a) 10 - 90 wt%. of an organic acid selected from the group consisting of acetic, propionic, butyric acid and mixtures thereof,

b) 1 - 90 wt.% of ethoxylated castor oil surfactant having an HLB from 4 to 18 and a molar ratio of 1 molecule of castor oil to 1 - 200 molecules of ethylene oxide,

c) 0- 20 wt.% of antimicrobial terpenes, or essential oils;

d) 0 - 40 wt.% water;

adding water to prepare a heat-treating composition and applying an effective amount of said heat-treating composition to an animal feed, with sufficient heating to pelletize the feed.
The composition may also contain an effective amount of organic acids having 1 to 24 carbons.
The antimicrobial terpenes, plant extracts or essential oils containing terpenes can be used in the compositions as well as the more purified terpenes. Terpenes are readily available commercially or can be produced by methods known in the art, such as solvent extraction or steam extraction/distillation or chemical synthesis.

The surfactant is non-ionic including ethoxylated castor oil surfactants with 1 to 200 ethylene molecules distributed normally around the mean, preferably a mean of 40 to 80.

The composition of the stock solution may contain 1 to 99% by weight organic acids, preferably 20 - 70 wt.%; exemplary acids include 0 to 99% by weight acetic acid, 0 to 99% by weight propionic acid, and 0 to 99% by weight butyric acid. The composition may comprise 0 to 10% by weight antimicrobial terpenes or essential oils, and 1 to 9% by weight surfactant. The stock composition comprises 0 to 40% water.

The stock composition of components a), b), c) and d) is diluted with water to form a heat-treating composition which is a 5 to 15 wt.% aqueous mixture, preferably a 5 to 10 wt.% mixture. This aqueous mixture is applied to the non-pelleted feed in amounts of 1 to 5 wt.% based on the total feed, preferably 1 to 3 wt%.

The acids of component a) may be buffered or unbuffered. The buffer may be calcium hydroxide, ammonium hydroxide or sodium hydroxide.

The heat-treating composition may be applied to the animal feed in an amount of 0.25 to 20 wt.% based on the weight of the starting animal feed, preferably 1 to 10 wt.%.

In general, component a) is 20- 70 wt.%, component b) is 1 - 20 wt.%, component c) is 0.1 - 5 wt%, based on the weight of said composition.

Component b) may contain a second surfactant that is a non-ionic surfactant. When a second surfactant is present it is preferably a non-ionic surfactant selected from polysorbates and polyoxyethylenes.

Component c) preferably contains terpenes selected from the group consisting of allyl disulfide, thymol, citral, eugenol, carvacrol, limonene or carvone, or mixtures thereof.

Methods

The present invention is effective against fungi. Examples of these infective agents are *Aspergillus fumigatus, Rhizoctonia solani, Penicillum spp.* and others.

The present invention is effective against bacteria. Examples of these infective agents include *E. coli, Salmonella spp., Clostridia spp., Campylobacter spp., Shigella spp., Brachyspira spp., Listeria spp., Arcobacter spp.,* and others.

The method of the present invention maintains moisture level in the pelletized feed higher than in an untreated feed or conventional pelletizing methods.

The aqueous mixture is applied to the raw material before entering the mixer. The aqueous mixture may be applied to the unmixed raw materials in the mixer or applied during the mixing of the raw ingredients and may be applied during the wet mixing cycle.

The mixture is applied by a spray nozzle.

The aqueous mixture is applied so as to provide a uniform and homogeneous distribution of the mixture throughout the feed.

**EXAMPLES**

**Example 1. (Comparative data)**

The surface tensions of various organic acids and different formulations were determined. Solutions were diluted to 5% in water and tested using a Fisher Surface Tensiomat Model 21. It was observed that formulation 2 with unbuffered acids and polysorbate-80 resulted in lowered surface tension as shown in Table 1.

Table 1: Surface tension of various formulations

| Component | Formula | | | | | | | | | | |
|---|---|---|---|---|---|---|---|---|---|---|---|
| | 1 | 2 | 3 | 4 | 5 | 6 | 7 | 8 | 9 | 10 | 11 |
| Acetic Acid | + | + | + | | + | | | | | | |
| Butyric Acid | | + | | | | + | | | | | |
| Propionic Acid | | | | | | | + | | | | |
| Lactic Acid | | | | | | | | + | | | |
| Citric Acid | | | | | | | | | + | | |
| Ammonium Butyrate | + | | | + | | | | | | | |

(continued)

| Component | Formula | | | | | | | | | | |
|---|---|---|---|---|---|---|---|---|---|---|---|
| | 1 | 2 | 3 | 4 | 5 | 6 | 7 | 8 | 9 | 10 | 11 |
| Ammonium Propionate | | | | + | | | | | | | |
| Polysorbate-80 | + | + | + | + | | | | | | + | |
| d-Limonene | + | + | + | + | | | | | | | |
| Water | + | + | + | | | | | | | | + |
| | | | | | | | | | | | |
| Surface Tension (dynes/cm) | 46.5 | 40.5 | 45.4 | 42.3 | 67.4 | 44.4 | 56.8 | 70.3 | 72.0 | 47.3 | 72.0 |

**Example 2.**

Polysorbate-80 is allowed only for use in milk replacers and not for feed application. In the European Union ethoxylated castor oil surfactant is allowed for use in all animals. In order to determine a suitable surfactant to replace polysorbate-80, the surface tensions of different PEG ethoxylated castor oil surfactants were tested in 5% solutions.

Table 2: Surface tension of various surfactants in water

| Surfactant | Surface Tension (dynes/cm) |
|---|---|
| Water | 73.45 |
| Castor oil PEG-60 | 41.35 |
| Castor oil PEG-200 | 41.03 |
| Castor oil PEG-40 | 40.25 |
| Polysorbate-80 | 40.57 |

**Example 3.**

The two best formulations from Example 1 were prepared using polysorbate-80 or castor oil PEG-60. The surface tension of 5% solutions of each formulation in water was determined. Formulae 2a and 4b are representative of the invention.

Table 3: Surface tension of formulations

| Component | Formula | | | | |
|---|---|---|---|---|---|
| | 1 | 2a | 2b | 4a | 4b |
| Acetic Acid | | + | + | + | + |
| Butyric Acid | | + | + | + | + |
| Propionic Acid | | + | + | + | + |
| Castor oil PEG-60 | | + | | + | |
| Polysorbate 80 | | | + | | + |
| d-Limonene | | + | + | + | + |
| Water | + | + | + | + | + |
| | | | | | |
| Surface Tension (dynes/cm) | 72.8 | 40.8 | 40.5 | 42.8 | 43.2 |

**Example 4.**

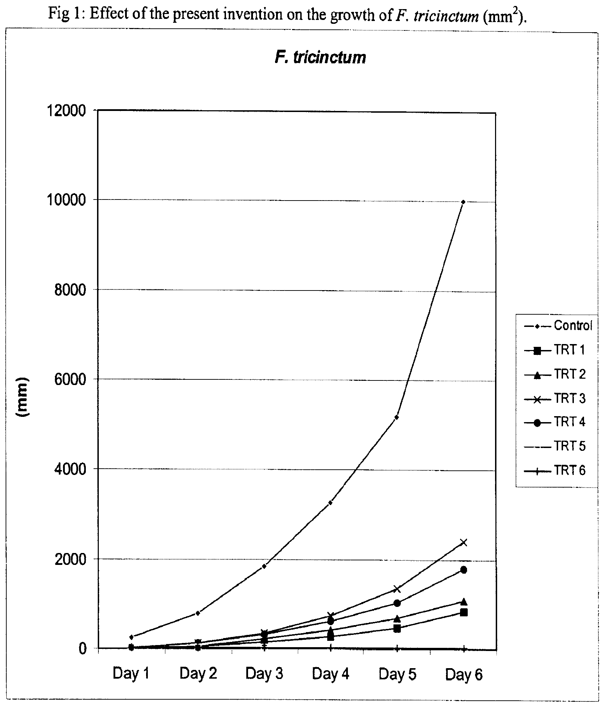

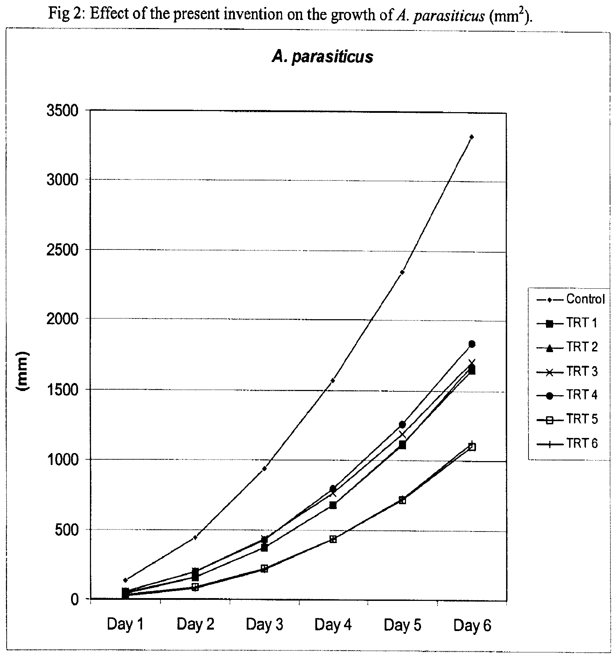

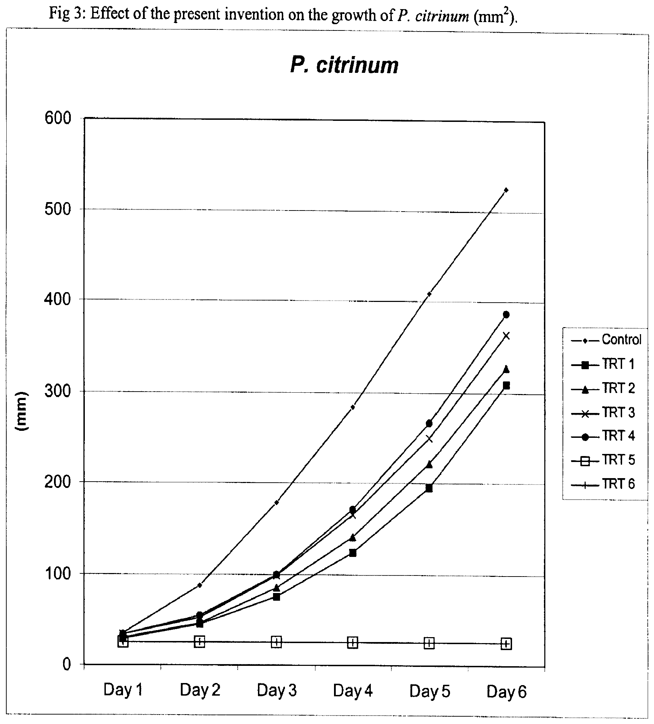

Different formulations were developed and tested for their effectiveness against mold growth in a mold plug study. Chemicals were added to potato dextrose agar (half-strength) in individual agar plates and allowed to solidify for 24 hours. 5 or 7 mm diameter agar plugs were aseptically obtained from 4-day cultures of *A. parasiticus, F. tricinctum* or *P. citrinum* and placed on the center of petri plates containing agar with and without chemical addition. Plates were incubated at 25 'C and growth areas of the cultures were measured daily for up to 6 days. Formulations used are shown in Table 4. Treatments 2, 4 and 6 are representative of the invention. Mold growth results are shown in Figures 1-3.

Table 4: Formulations used for the plug test

| Treatment | | Formulations for mold plug study | | | | | | | |
| --- | --- | --- | --- | --- | --- | --- | --- | --- |
| Treatment | Surfactant Type | Ammonium Propionate | Ammonium Butyrate | Butyric Acid | Acetic Acid | Surfactant | Terpene | Water |
| Control | none | - | | - | - | - | - | + |
| 1 | Polysorbate -80 | + | + | - | - | + | - | - |
| 2 | Co-60* | + | + | - | - | + | - | - |
| 3 | Polysorbate -80 | + | + | - | - | + | + | |
| 4 | Co-60* | + | + | - | - | + | + | |
| 5 | Polysorbate -80 | - | - | + | + | + | + | + |
| 6 | Co-60* | - | - | + | + | + | + | + |
| *Co-60 is ethoxylated castor oil surfactant with 60 ethylene units. | | | | | | | | |

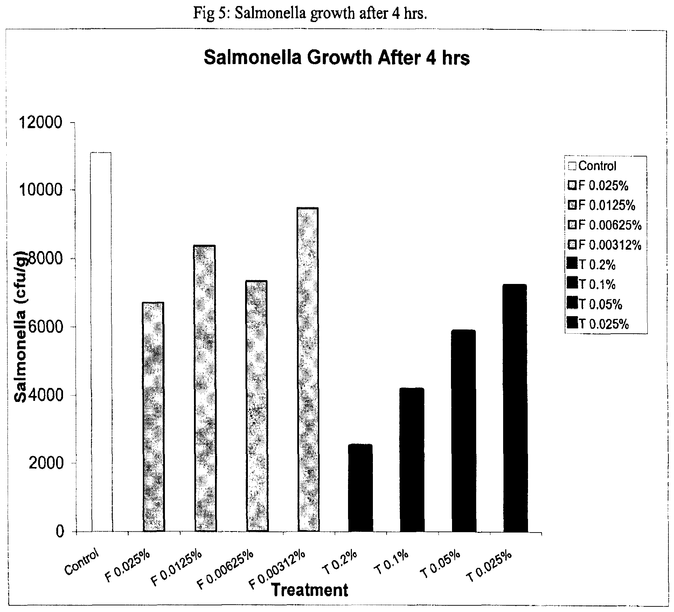

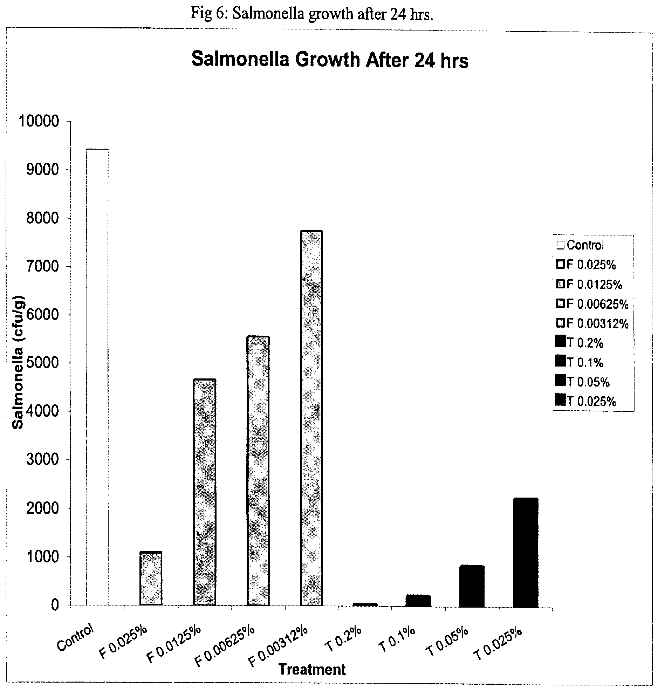

(triplicate). Plates were incubated at 35±2°C for 24 hrs prior to enumeration. The present invention at a concentration of 0.025% was as effective in reducing Salmonella growth as the same concentration of Formaldehyde. The results are shown in Figures 5 and 6.

**Example 7.**

Study 1: A study was conducted in a commercial-scale feed mill. The aim of the study was to show improvements in conditioning, energy reduction, mill throughput, reduction in shrinkage, quality improvements and to illustrate cost savings. The trial was conducted using a new pelleting machine. The diet used was # 6401 Duck Feed. The treatment solution was sprayed into a six-ton single shaft ribbon mixer and was applied through 6 atomizing nozzles. The level of inclusion in the treated feed was 1 wt.% application of a 5 wt.% solution of the present invention in water.

Table 6: Results from commercial-scale study

| Parameter | Control | Treated | Improvement over control |
|---|---|---|---|
| Finished Product Moisture | 10.26 | 11.03 | 7.5% |
| Tons/hr | 15.58 | 15.94 | 2.3% |
| kWh/ton | 9.62 | 8.27 | 14.0% |
| Delta T | 13.88 | 6.33 | 54.4% |
| PDI | 97.00 | 97.15 | 0.2% |
| Actual conditioner Temperature (°C) | 86.85 | 91.28 | 5.1 |

Summary:

1. Packing moisture was increased by 7.5%.
2. Mill throughput was increased by 2.3%.
3. kWh/ton was reduced 14%
4. Delta T values were reduced 54.4% resulting in die and roll savings.
5. Moisture retention was 77 % of the applied 1% treatment.
6. PDI was increased from 97% to 97.15 %.

Study 2: A second study was conducted in a commercial-scale feed mill. The aim was to show improvements in conditioning, energy reduction, mill throughput, reduction in shrinkage, quality improvements and to illustrate cost savings. Two types of pig feed were used for the study. The level of inclusion in the treated feed was 1 wt.% of a 5% solution of the present invention in water. One percent water was added to the control group.

Table 7: Results from commercial study

| Parameter | Control | Treated | Improvement over control |
|---|---|---|---|
| Pellet Motor (Amps) | 240 | 217.5 | 9.4% |
| Actual Conditioner Temperature (°C) | 74.57 | 76.15 | 2.1% |
| Packing Moisture | 10.7 | 12.08 | 12.9% |
| Ton/hr | 7.67 | 8.51 | 11% |
| kWh/ton | 18.00 | 14.74 | 18.1% |
| Delta T | 14.35 | 8.93 | 37.8% |

Summary:

1. Sustainable packing moisture was increase 12.9%, moisture retention was 75% of the treatment dose.
2. Throughput was increased 11 % on average.
3. Energy use was decreased 18.1 % on average.
4. Delta T values were reduced 37.8%on average, resulting in less wear on die and rolls.
5. Pellet motor amps were reduced 9.4% on average.
6. Conditioner temperature was raised 1.6 °C on average.

Study 3: A third study was conducted in a commercial-scale feed mill. The aim was to show improvements in conditioning, energy reduction, mill throughput, reduction in shrinkage, quality improvements and cost savings. A 612 Sa Broiler Grower diet was used. The level of inclusion in the treated feed was 1 wt.% of a 5% solution of the present invention in water. One percent water was added to the control group.

Table 8: Results from commercial study

| Parameter | Control | Treated | Improvement over control |
|---|---|---|---|
| Pellet Motor (Amps) | 210 | 194 | 7.6% |
| Actual Conditioner Temperature (°C) | 83.8 | 84.7 | 1.1% |
| PDI (T1) | 93 | 92.65 | 0.4% |
| Fines Produced (cooler) | 3.47 | 2.3 | 33.7% |
| Ton/hr | 12.58 | 14.6 | 16.0% |
| kWh/ton | 9.57 | 7.73 | 19.2% |
| Delta T | 8.02 | 3.76 | 53.1% |

Summary:

1. Throughput was increased 16.0% on average.
2. Energy usage was decreased 19.2% on average.
3. Delta T values were reduced by 53.1 %, resulting in less wear on die and rolls.
4. Pellet motor amps were reduced 7.6 % (16 Amps) on average,.

Study 4: Trials were run at a pilot feed plant. The aim of these trials was to assess the moisture retention of the invention compared to water and simultaneously compare milling parameters such as conditioning temperatures (°C), energy consumption (kWh/ton) and pellet quality (expressed as a % fines). Three different types of feed were used, broiler, pig and dairy diets. To the control diets, 1 wt.% water was added at the conditioner, and for the treated feed 1 wt.% of a 5 wt.% solution of the present invention in water was added at the mixer. All parameters measured were improved by the use of the invention as shown in tables 9-11.

Table 9: Results from Broiler Feed

| Broiler Diet | Control | Treated | Improvement over control |
|---|---|---|---|
| Pellet Moisture | 12.45 | 12.83 | 0.38% |
| kWh/ton | 12.43 | 10.53 | 15.2% |
| % fines | 48.35 | 36.89 | 23.3% |
| Delta T | 6.67 | 3.34 | 50% |

Table 10: Results from Pig Feed

| Pig Diet | Control | Treated | Improvement over control |
|---|---|---|---|
| Pellet Moisture | 13.115 | 13.55 | 0.435% |

(continued)

| Pig Diet | Control | Treated | Improvement over control |
|---|---|---|---|
| kWh/ton | 17.72 | 16.73 | 5.5% |
| % fines | 4.45 | 3.90 | 12.5% |
| Delta T | 13.34 | 12.5 | 5.2% |

Table 11: Results from Dairy Feed

| Dairy Diet | Control | Treated | Improvement over control |
|---|---|---|---|
| Pellet Moisture | 12.76 | 13.21 | 0.445% |
| kWh/ton | 12.70 | 10.49 | 17.45% |
| % fines | 11.25 | 8.58 | 21.6% |
| Delta T | 7.67 | 3.88 | 49.25% |

**Example 8.**

A palatability study was conducted to test for the effect of feeding diets untreated or treated with the present invention on palatability of feed. Two hundred male broiler chickens were weighed in groups and allotted to 4 treatments. Each treatment consisted of 5 repetitions of 10 chicks each. The treatments are described in the following table:

Table 12: Chemical Analysis of Feed

| Exp | Treatment amount (kg/metric ton) | Reps | # Chicks | Chemical Analysis (kg/MT) |
|---|---|---|---|---|
| 1 | Stock solution 2a - 0.5 kg/MT | 5 | 10 | 0.27 |
| 2 | Stock solution 2a - 1.0 kg/MT | 5 | 10 | 0.81 |
| 3 | Stock solution 2a - 2.0 kg/MT | 5 | 10 | 1.99 |
| 4 | Stock solution 2a - 4.0 kg/MT | 5 | 10 | 4.53 |

The diets consisted of commercial corn-soybean diets prepared as suggested above and fed for 21 days. Control diet was fed to all chickens for the first week. Chickens were weighed at 1 week of age and sorted by weight into respective treatments. The feed was tested for the presence of organic acids and for the suggested dose of heat-treating solution.

Starting at the second week of age, chickens were offered untreated and treated feed at the same time. Two feeders, one at each side of each cage, were marked based on treatment. Initial feed weight was taken as well as daily weights. The feeders were switched daily. This study determined any difference in feed intake when comparing treated and untreated feed.

Pen chick weights were measured weekly for three weeks. Feed conversion and feed intake was calculated for the same time periods as the body weights.

Palatability was assessed as Intake Ratio (IR):

$$IR = A / (A+C)$$

whereas A= test feed, C= control feed

IR < 0.5 = no preference for the test feed

IR > 0.5 = preference for the test feed

There were no differences in body weight gain or weekly feed intake. During the pretreatment period (first week of age) feed intake and body weight gain were similar for all treatments. At the start of the second week, chickens preferred to eat the treated feed independent of the treatment level and this was observed during the third week of age also. Based on the Intake Ratio (IR), chickens preferred the treated feed.

Table 13: Intake Ratio results

| Treatments | Intake Ratio | | |
|---|---|---|---|
| | 2-wk of age | 3-wk of age | 2-wk to 3-wk of age |
| Stock solution 2a - 0.5 kg/MT | 0.670 | 0.592 | 0.622 |
| Stock solution 2a - 1.0 kg/MT | 0.649 | 0.602 | 0.619 |
| Stock solution 2a - 2.0 kg/MT | 0.663 | 0.648 | 0.654 |
| Stock solution 2a - 4.0 kg/MT | 0.683 | 0.700 | 0.693 |

It will be apparent to those skilled in the art that variations and modifications of the invention can be made without departing from the teachings above. It is intended that the specification and examples be considered as exemplary only and are not restrictive.

**Claims**

1. A method for making pelleted animal feed, comprising:

   (i) preparing a stock composition containing,

   a) 10 - 90 wt%. of a buffered or an unbuffered organic acid selected from the group consisting of acetic, propionic, butyric acid and mixtures thereof,
   b) 1 - 90 wt.% of ethoxylated castor oil surfactant having an HLB from 4 to 18 and a molar ratio of 1 molecule of castor oil to 1 - 200 molecules of ethylene oxide,
   c) 0 - 20 wt.% of antimicrobial terpenes, or essential oils;
   d) 0 - 40 wt.% of water;

   (ii) adding water to prepare a heat-treating composition and applying an effective amount of said heat-treating composition to an animal feed, with sufficient heating to pelletize or extrude the feed.

2. The method of claim 1, wherein said heat-treating composition is applied to the animal feed as an 5 to 20 wt.% mixture in water.

3. The method of claim 1, wherein the heat-treating composition is applied to the animal feed in an amount of 0.25 to 10 wt.% based on the weight of the feed.

4. The method of claim 1, wherein component a) is 20 - 70 wt.%, component b) is 1-20 wt.%, component c) is 0.1 - 5 wt%, based on the weight of said stock composition.

5. The method of claim 1, wherein the treated feed has a bacterial load less than 10000 cfu/g.

6. The method of claim 1, wherein the treated feed has a mold load less than 10000 cfu/g.

7. The method of claim 1, wherein a) contains acetic acid.

8. The method of claim 1, wherein a) contains propionic acid.

9. The method of claim 1, wherein a) contains butyric acid.

10. The method of claim 1, wherein the acids of a) are unbuffered.

11. The method of claim 1, wherein b) contains a second non-ionic surfactant.

12. The method of claim 1, wherein b) contains a second non-ionic surfactant selected from polysorbates and polyoxyethylenes.

13. The method of claim 1, wherein c) contains terpenes selected from the group consisting of allyl disulfide, thymol, citral, eugenol, carvacrol, limonene or carvone, or mixtures thereof.

**Patentansprüche**

1. Verfahren zur Herstellung von pelletiertem Tierfutter, wobei das Verfahren Folgendes umfasst:

(i) Zubereiten einer Stammzusammensetzung, die Folgendes enthält:

a) 10-90 Gew.-% einer gepufferten oder einer ungepufferten organischen Säure, die aus der Gruppe bestehend aus Essigsäure, Propansäure, Buttersäure und Gemischen davon ausgewählt ist,
b) 1-90 Gew.-% eines ethoxylierten Rizinusöl-Tensids mit einem HLB von 4 bis 18 und einem Molverhältnis von 1 Molekül Rizinusöl zu 1-200 Molekülen Ethylenoxid,
c) 0-20 Gew.-% antimikrobiell wirkender Terpene oder ätherischer Öle;
d) 0-40 Gew.-% Wasser;

(ii) Zugeben von Wasser, um eine Wärmebehandlungszusammensetzung zuzubereiten, und Aufbringen einer wirksamen Menge der Wärmebehandlungszusammensetzung auf ein Tierfutter unter ausreichender Wärme, um das Futter zu pelletieren oder extrudieren.

2. Verfahren nach Anspruch 1, wobei die Wärmebehandlungszusammensetzung auf das Tierfutter als ein 5- bis 20 Gew.-%-iges Gemisch in Wasser aufgebracht wird.

3. Verfahren nach Anspruch 1, wobei die Wärmebehandlungszusammensetzung auf das Tierfutter in einer Menge von 0,25 bis 10 Gew.-%, bezogen auf das Gewicht des Futters, aufgebracht wird.

4. Verfahren nach Anspruch 1, wobei Komponente a) 20-70 Gew.-% ist, Komponente b) 1-20 Gew.-% ist, Komponente c) 0,1-5 Gew.-% ist, bezogen auf das Gewicht der Stammzusammensetzung.

5. Verfahren nach Anspruch 1, wobei das behandelte Futter eine bakterielle Belastung von weniger als 10.000 KBE/g aufweist.

6. Verfahren nach Anspruch 1, wobei das behandelte Futter eine Schimmelbelastung von weniger als 10.000 KBE/g aufweist.

7. Verfahren nach Anspruch 1, wobei a) Essigsäure enthält.

8. Verfahren nach Anspruch 1, wobei a) Propansäure enthält.

9. Verfahren nach Anspruch 1, wobei a) Buttersäure enthält.

10. Verfahren nach Anspruch 1, wobei die Säuren von a) ungepuffert sind.

11. Verfahren nach Anspruch 1, wobei b) ein zweites nichtionisches Tensid enthält.

12. Verfahren nach Anspruch 1, wobei b) ein zweites nichtionisches Tensid enthält, das aus Polysorbaten und Polyoxyethylen ausgewählt ist.

13. Verfahren nach Anspruch 1, wobei c) Terpene enthält, die aus der Gruppe bestehend aus Allyldisulfid, Thymol, Citral, Eugenol, Carvacrol, Limonen oder Carvon oder Gemischen davon ausgewählt ist.

**Revendications**

1. Procédé de fabrication d'aliments pour animaux granulés, comprenant :

(i) la préparation d'une composition de base contenant,

a) de 10 à 90 % en poids d'un acide organique tamponné ou non-tamponné choisi dans le groupe constitué par les acides acétique, propionique, butyrique et des mélanges de ceux-ci,
b) de 1 à 90 % en poids de tensioactif d'huile de ricin éthoxylée possédant un HLB allant de 4 à 18 et un rapport molaire de 1 molécule d'huile de ricin pour 1 à 200 molécules d'oxyde d'éthylène,
c) de 0 à 20 % en poids de terpènes antimicrobiens, ou d'huiles essentielles ;
d) de 0 à 40 % en poids d'eau ;

(ii) l'adjonction d'eau pour préparer une composition de traitement thermique et l'application d'une quantité efficace de ladite composition de traitement thermique à un aliment pour animaux, avec un chauffage suffisant pour granuler ou extruder l'aliment.

**2.** Procédé selon la revendication 1, ladite composition de traitement thermique étant appliquée à l'aliment pour animaux sous forme d'un mélange de 5 à 20 % en poids dans l'eau.

**3.** Procédé selon la revendication 1, ladite composition de traitement thermique étant appliquée à l'aliment pour animaux en une quantité de 0,25 à 10 % en poids par rapport au poids de l'aliment.

**4.** Procédé selon la revendication 1, ledit constituant a) représentant de 20 à 70 % en poids, ledit constituant b) représentant de 1 à 20 % en poids, ledit constituant c) représentant de 0,1 à 5 % en poids, par rapport au poids de ladite composition de base.

**5.** Procédé selon la revendication 1, ledit aliment traité possédant une charge bactérienne inférieure à 10 000 ufc/g.

**6.** Procédé selon la revendication 1, ledit aliment traité possédant une charge en moisissures inférieure à 10 000 ufc/g.

**7.** Procédé selon la revendication 1, a) contenant de l'acide acétique.

**8.** Procédé selon la revendication 1, a) contenant de l'acide propionique.

**9.** Procédé selon la revendication 1, a) contenant de l'acide butyrique.

**10.** Procédé selon la revendication 1, lesdits acides de a) étant non-tamponnés.

**11.** Procédé selon la revendication 1, b) contenant un second tensioactif non ionique.

**12.** Procédé selon la revendication 1, b) contenant un second tensioactif non ionique sélectionné parmi les polysorbates et les polyoxyéthylènes.

**13.** Procédé selon la revendication 1, c) contenant des terpènes sélectionnés dans le groupe constitué par le disulfure d'allyle, le thymol, le citral, l'eugénol, le carvacrol, le limonène ou le carvone ou des mélanges de ceux-ci.

Fig 1: Effect of the present invention on the growth of *F. tricinctum* (mm²).

Fig 2: Effect of the present invention on the growth of *A. parasiticus* (mm$^2$).

Fig 3: Effect of the present invention on the growth of *P. citrinum* (mm$^2$).

Fig 5: Salmonella growth after 4 hrs.

Fig 6: Salmonella growth after 24 hrs.

Salmonella Growth After 24 hrs

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6867233 B
- US 7169424 B
- US 200780001 W
- WO 9960865 A
- WO 9728896 A
- WO 9611585 A
- WO 9528091 A
- US 5505976 A
- US 2008044538 A
- US 4701331 A

**Non-patent literature cited in the description**

- **BEHNKE, K. C.** *Factors affecting pellet quality,* 1994, 44-54
- Proc. Maryland Nutr. Conf. Feed Manuf. College Park, MD. Maryland Feed Ind. Council. and Univ. Maryland, College Park. Briggs
- **J.L. ; D.E. MAIER ; B.A. WATKINS ; K.C. BEHNKE.** Effect of ingredients and processing parameters on pellet quality. *Poult. Sci.,* 1999, vol. 78, 1464-1471
- **JENSEN L. ; L.H. MERILL ; C.V. REDDY ; J. MCGINNIS.** Observations on eating patterns and rate of food passage of birds fed pelleted or unpelleted diets. *Poult. Sci.,* 1962, vol. 41, 1414-1419
- **PARKER, R. ; S.G. RING.** Mini Review: Aspects of the Physical Chemistry of Starch. *J. Cereal Sci.,* 2001, vol. 34, 1-17
- **LUND, D.** Influence of time, temperature, moisture, ingredients and processing conditions on starch gelatinization. *CRC Crit. Rev. Food Sci. Nutr.,* 1984, vol. 20, 249-273
- **FAIRFIELD, D.** Pelleting for Profit-Part 1. *Feed and Feeding,* 2003, vol. 54 (6
- **FAIRCHILD, F. ; D. GREER.** Pelleting with precise mixer moisture control. *Feed Int.,* 1999, vol. 20 (8), 32-36
- **MORITZ, J.S et al.** Feed manufacture and feeding of rations with graded levels of added moisture formulated at different densities. *J. Appl. Pout. Res.,* 2003, vol. 12, 371-381
- **MORITZ, J. S. et al.** Effect of moisture addition at the mixer to a corn-soybean-based diet on broiler performance. *J. Appl. Poult. Res.,* 2001, vol. 10, 347-353
- **HOTT et al.** The effect of moisture addition with a mold inhibitor on pellet quality, feed manufacture and broiler performance. *J. Appl. Poult. Res.,* 2008, vol. 17, 262-271
- **RAHNEMA, S. ; S.M. NEAL.** Preservation and use of chemically treated high-moisture corn by weanling pigs. *J. Prod. Agric.,* 1992, vol. 5 (4), 458-461
- **SMITH, J.E.** Mycotoxins and poultry management. *World's Poult. Sci. J.,* 1982, vol. 38 (3), 201-212
- **TABIB, Z. ; F. JONES ; P.B. HAMILTON.** Effect of pelleting poultry feed on the activity of molds and mold inhibitors. *Poult Sci.,* 1984, vol. 63, 70-75
- **VAN IMMERSEEL, F. ; J.B. RUSSELL ; M.D. FLYTHE ; I. GANTOIS ; L.TIMBERMONT ; F. PASMANS ; F.HAESEBROUCK ; R. DUCATELLE.** The use of organic acids to combat Salmonella in poultry: a mechanistic explanation of the efficacy. *Avian Pathology,* 2006, vol. 35 (3), 182-188
- **PASTER, N.** A commercial scale study of the efficiency of propionic acid and calcium propionate as fungistats in poultry feed. *Poult Sci.,* 1979, vol. 58, 572-576
- **HIGGINS C. ; F. BRINKHAUS.** Efficacy of several organic acids against mold. *J. Applied Poultry Res.,* 1999, vol. 8, 480-487
- **AKBARI, M.R. ; H. KERMANSHANI ; G.A. KALIDARI.** Effect of acetic acid administration in drinking water on performance growth characteristics and ileal microflora of broiler chickens. *J. Sci. & Technol. Agric. & Natur. Resour.,* 2004, vol. 8 (3), 148
- **HENDERSON, S.** Early events in the pathogenesis of avian salmonellosis. *Infec. Immun.,* 1999, vol. 67 (7), 3580-3586
- **HUMPHREY, T.J.** Contamination of egg shell and contents with Salmonella enteritidis. *Int. J. Food Microbiol.,* 1994, vol. 21 (1-2), 31-40
- **KELLER, L.H.** Salmonella enteritidis colonization of the reproductive tract and forming and freshly laid eggs of chickens. *Infec. Immun.,* 1995, vol. 63 (7), 2443-2449
- **FRUIJTIER-POLLOTH, C.** Safety assessment on polyethylene glycols (PEGs) and their derivatives as used in cosmetic products. *Toxicology,* 2005, vol. 214, 1-38